# EUROPEAN PATENT SPECIFICATION

(11) **EP 3 813 471 B1**
(45) Date of publication and mention of the grant of the patent: **05.04.2023**
(21) Application number: 19821974.3
(22) Date of filing: 10.04.2019
(51) Int. Cl.: H04W 74/08, H04W 74/00

(54) **METHOD FOR INDICATING CHANNEL ACCESS TYPE, TERMINAL DEVICE AND NETWORK DEVICE**
VERFAHREN ZUR ANZEIGE DES KANALZUGRIFFSTYPS, ENDGERÄT UND NETZWERKVORRICHTUNG
PROCÉDÉ D'INDICATION DE TYPE D'ACCÈS À UN CANAL, DISPOSITIF TERMINAL ET DISPOSITIF DE RÉSEAU

(30) Priority: 19.06.2018 CN 201810631770
(43) Date of publication of application: 28.04.2021
(73) Proprietor: GUANGDONG OPPO MOBILE TELECOMMUNICATIONS CORP., LTD., Dongguan Guangdong 523860 (CN)
(72) Inventor: SHI, Cong, Dongguan, Guangdong 523860 (CN)
(74) Representative: RGTH
(86) International application number: PCT/CN2019/082139
(87) International publication number: WO 2019/242382

(56) References cited:
- WO-A1-2018/033106
- WO-A2-2010/090440
- CN-A- 102 014 516
- CN-A- 104 427 634
- CN-A- 104 469 966
- CN-A- 105 992 383

## Description

### TECHNICAL FIELD

The disclosure relates to the technical field of information processing, and particularly to a method for indicating a channel access type, and a terminal device.

### BACKGROUND

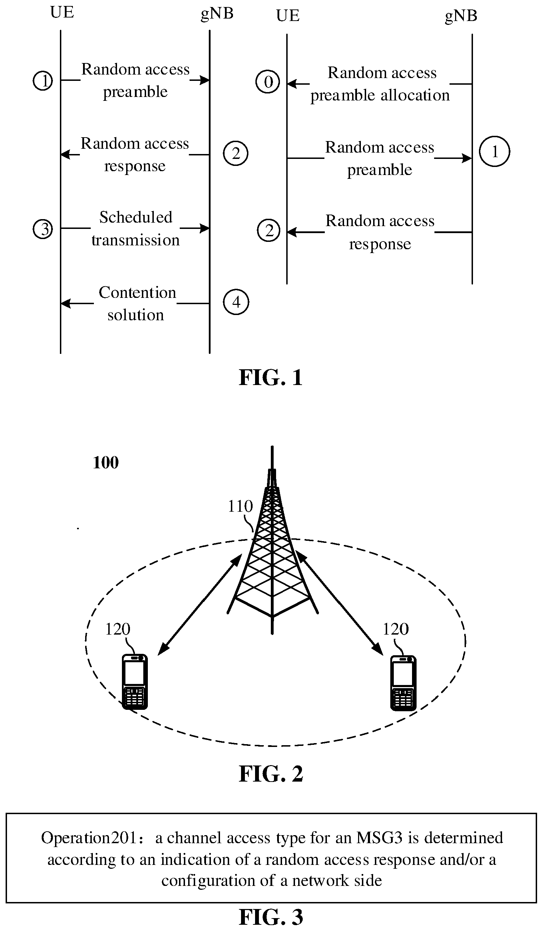

A random access (RACH) process may be triggered by the following events: initial access in a radio resource control (RRC) idle state, reestablishment of an RRC connected state, handover, arrival of Uplink (UL) or Downlink (DL) data in an RRC connected state when a UL synchronous state is asynchronous, transmission in an RRC active state, requesting for other System Information (SI), and beam failure recovery. As shown in FIG. 1, a RACH process usually includes two forms: contention-based RACH (CB-RACH) and contention-free RACH (CF-RACH).

Data transmission of a terminal device in an unlicensed spectrum is required to meet requirements of some unlicensed spectrum regulations. If detected energy is lower than a certain threshold value, it is determined that the terminal can transmit data in a corresponding channel. Long Term Evolution (LTE) supports that an unlicensed spectrum is used in a Carrier Aggregation (CA) manner. That is, a Primary Cell (PCell) operates in a licensed spectrum and provides a basic access function and a data transmission function, and a Secondary Cell (SCell) operates in the unlicensed spectrum for being used as data boosting. New Radio (NR) Unlicensed is required to support a Licensed Assisted Access (LAA) manner as well as a stand-alone operation mode. For stand-alone, a RACH process is also required to be implemented in an unlicensed spectrum. Therefore, RACH is required to be further optimized for an unlicensed requirement, and is also required to meet a requirement of an unlicensed spectrum access, for example, Listen Before Talk (LBT).

At present, two access types are defined for LAA: type1 (first channel access type) and type2 (second channel access type). For an access manner of type1, the following four priorities are involved.

| Channel access priority ( *p* ) | Quality of Service (QoS) Class Identifier (QCI) |
|---|---|
| 1 | 1, 3, 5, 65, 66, 69, 70 |
| 2 | 2, 7 |
| 3 | 4, 6, 8, 9 |
| 4 | - |

However, no access channel type is defined in design of Enhanced LAA (eLAA).

### SUMMARY

For solving the foregoing technical problem, the embodiments of the disclosure provide a method for indicating a channel access type, and a terminal device, to enable a terminal side to determine a channel access type for a Message 3 (MSG3).

A first aspect provides a method for indicating a channel access type, which may be applied to a terminal device and include the following operation.

A channel access type for an MSG3 is determined according to an indication of a random access response and/or according to a configuration of a network side.

A second aspect provides a terminal device, which may include a first processing unit.

The first processing unit may be configured to determine a channel access type for an MSG3 according to an indication of a random access response and/or according to a configuration of a network side.

According to the technical solutions of the embodiments of the disclosure, the terminal device determines the channel access type used when the MSG3 is sent based on the configuration of the network side and/or the indication of the random access response. In this way, it is ensured that the terminal device can determine a channel access type to be used, and use different channel access priorities based on different service conditions, thereby improving access efficiency of the system.

### BRIEF DESCRIPTION OF THE DRAWINGS

FIG. 1 is a schematic diagram of a scenario of random access according to an embodiment of the disclosure.
FIG. 2 is a first architecture diagram of a communication system according to an embodiment of the disclosure.
FIG. 3 is a first flowchart of a method for indicating a channel access type according to an embodiment of the disclosure.
FIG. 4 is a first schematic diagram of a scenario in which a channel access type is indicated according to an embodiment of the disclosure.
FIG. 5 is a second schematic diagram of a scenario in which a channel access type is indicated according to an embodiment of the disclosure.
FIG. 6 is a second flowchart of a method for indicating a channel access type according to an embodiment of the disclosure.
FIG. 7 is a composition structure diagram of a terminal device according to an embodiment of the disclosure.
FIG. 8 is a composition structure diagram of a network device according to an embodiment of the disclosure.
FIG. 9 is a composition structure diagram of a communication device according to an embodiment of the disclosure.
FIG. 10 is a schematic block diagram of a chip according to an embodiment of the disclosure.
FIG. 11 is a second architecture diagram of a communication system according to an embodiment of the disclosure.

### DETAILED DESCRIPTION

The technical solutions in the embodiments of the disclosure are described below in combination with the drawings in the embodiments of the disclosure.

The technical solutions of the embodiments of the disclosure may be applied to various communication systems such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system and a 5th-Generation (5G) system.

Exemplarily, a communication system 100 in the embodiments of the disclosure may be illustrated in FIG. 2 and may include a network device 110 which may be a device communicating with a terminal device 120 (a communication terminal or a terminal). The network device 110 may provide communication coverage for a particular geographical area and communicate with a terminal device located in the coverage. Optionally, the network device 110 may be a base station (a Base Transceiver Station (BTS)) in a GSM system or a CDMA system, a base station (a NodeB (NB)) in a WCDMA system, an evolutional base station (an Evolutional Node B (eNB or eNodeB)) in an LTE system, a wireless controller in a Cloud Radio Access Network (CRAN). Alternatively, the network device may be a mobile exchange center, a relay station, an access point, an on-board device, a wearable device, a hub, a switch, a bridge, a router, a network side device in a 5G network, a network device in a future evolutional Public Land Mobile Network (PLMN) or the like.

The communication system 100 further includes at least one terminal device 120 in the coverage of the network device 110. The terminal device used herein includes but is not limited to be connected via a wired line such as a Public Switched Telephone Network (PSTN), a Digital Subscriber Line (DSL), a digital cable, a direct cable, and/or via another data connection or network, and/or via a wireless interface such as a cellular network, a wireless local area network (WLAN), a digital television network like a Digital Video Broadcasting-Handheld (DVB-H) network, a satellite network, an Amplitude Modulation-Frequency Modulation (AM-FM) broadcasting transmitter, and/or via a device, which is configured to receive/send a communication signal, of another terminal device and/or an Internet of Things (IoT) device. The terminal device configured to communicate through the wireless interface may be referred to as "a wireless communication terminal", "a wireless terminal" or "a mobile "terminal". Examples of a mobile terminal include, but not limited to, a satellite or cellular telephone, a personal communication system (PCS) terminal capable of combining a cellular radio telephone and data processing, faxing and data communication capabilities, a personal digital assistant (PDA) capable of including a radio telephone, a pager, Internet/intranet access, a Web browser, a notepad, a calendar and/or a Global Positioning System (GPS) receiver, and a conventional laptop and/or palmtop receiver or another electronic device including a radio telephone transceiver. The terminal device may refer to an access terminal, User Equipment (UE), a user unit, a user station, a mobile station, a mobile radio station, a remote station, a remote terminal, a mobile device , a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device having a wireless communication function, a computing device, another processing device connected to a wireless modem, an on-board device, a wearable device, a terminal device in the 5G network, a terminal device in the future evolved PLMN or the like.

Optionally, Device to Device (D2D) communication may be performed between the terminal devices 120.

Optionally, the 5G system or the 5G network may also be called a New Radio (NR) system or an NR network.

One network device and two terminals are exemplarily shown in FIG. 2. Optionally, the communication system 100 may include multiple network devices, and each of the network devices may have other number of terminals in coverage thereof, which is not limited in the embodiments of the disclosure.

Optionally, the communication system 100 may further include another network entity such as a network controller and a mobility management entity, which is not limited in the embodiments of the disclosure.

It is to be understood that a device having a communication function in the network/system in the embodiments of the disclosure may be called a communication device. Taking the communication system 100 shown in FIG. 2 as an example, the communication device may include the network device 110 and terminal 120 having the communication function, and the network device 110 and the terminal 120 may be the specific devices mentioned above and will not be elaborated herein. The communication device may further include other devices in the communication system 100, for example, other network entities like a network controller and a mobility management entity, which is not limited in the embodiments of the disclosure.

It should be understood that the terms "system" and "network" are often used interchangeably herein. The term "and/or" herein only represent an association relationship of associated objects, which means that there may be three relationships. For example, A and/or B can mean: only A exists, both A and B exist, and only B exists. In addition, the character "/" herein generally indicates that there is an "or" relationship between two associated objects.

As shown in FIG. 3, the embodiments of the disclosure provide a method for indicating a channel access type, which is applied to a terminal device and includes the following operations. In 201, a channel access type for an MSG3 is determined according to an indication of a random access response and/or according to a configuration of a network side.

That is, the channel access type for the MSG3 is determined according to an indication of an MSG2 and/or according to a configuration of the network side.

The random access response includes the channel access type for the MSG3.

Specifically, the following manners may be adopted.

### First Manner

The channel access type for the MSG3 is contained in a subheader of the random access response, and the channel access type for the MSG3 is indicated through a reserved bit of the subheader of the random access response.

The channel access type may be indicated through the reserved bit of the subheader of the random access response.

Furthermore, the channel access type for the MSG3 is indicated through an independent subheader of the random access response.

The independent subheader of the random access response may have different format from a subheader in a conventional art, and a specific format thereof is not limited in the embodiment, and is distinguished from the subheader defined in the conventional art.

### Second Manner

The channel access type for the MSG3 is contained in a payload of the random access response. The channel access type for the MSG3 is indicated through a reserved bit of the payload of the random access response.

Based on the above description, the channel access type for the MSG3 in the embodiment is a common channel type or different channel types for different terminal devices.

That is, an indication of the channel access type may be an indication of the common channel type, or may also be indications of different channel types for different terminal devices.

A processing manner for determining the channel access type for the MSG3 of the terminal device according to the indication of the RAR is described above, and a processing solution for determining the channel access type for the MSG3 of the terminal device through the configuration of the network side is described below.

At least one channel access type is configured through RRC signaling of the network side.

Identification information of the channel access type for the MSG3 is indicated through the random access response.

The channel access type for the MSG3 is one of the at least one channel access type configured through the RRC signaling.

It is to be pointed out that the network side may configure the at least one channel access type for the terminal device through the RRC signaling, and may further configure identification information index corresponding to each channel access type.

Correspondingly, when the channel access type for the MSG3 is indicated through the RAR, the identification information may be directly sent to indicate the channel access type, to be used by the terminal device, for the MSG3.

In the embodiment, the channel access type includes at least one of: a first channel access type, a second channel access type, at least one access class in the first channel access type and at least one third channel access type.

An access class in the third channel access type is different from an access class in the first channel access type and the second channel access type.

The third channel access type may include multiple access classes, and the access classes in the third channel access type are different from access classes of other types defined in the conventional art.

In addition, the terminal device may also determine the channel access type for the MSG3 according to time when random access is presently initiated, and the at least one channel access type configured through RRC. Specifically, when transmission time of the MSG3 is outside maximum channel occupation time (MCOT) of the random access response, the channel access type for the MSG3 is determined according to an event for presently initiating random access and the at least one channel access type configured through RRC.

Whether the transmission time of the MSG3 is outside the MCOT of the RAR may be configured by the network side.

The solution provided in the embodiment is exemplarily described below.

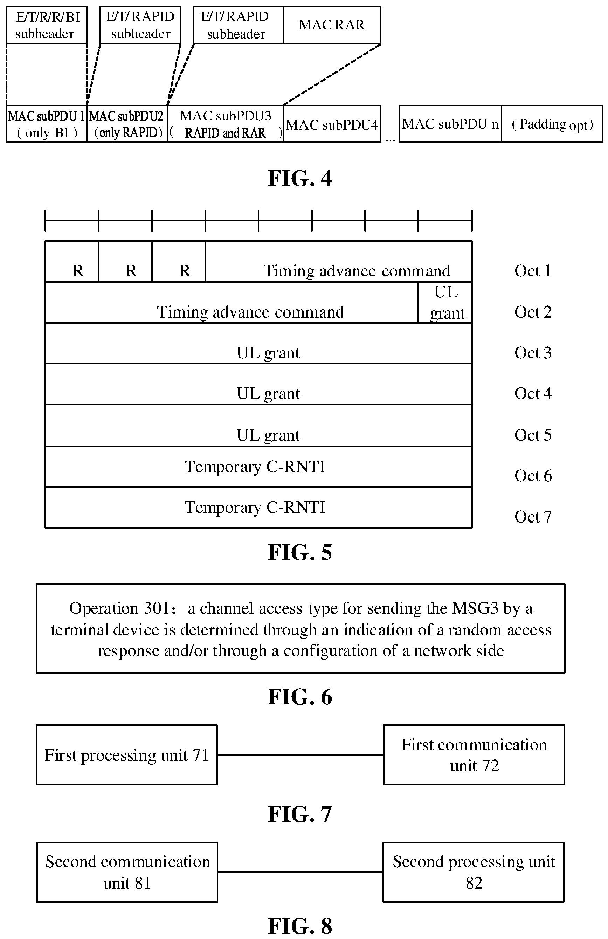

In a first example, a format of the RAR is shown in FIG. 4. A network may indicate a common channel access priority through two R (reserved) bits in the subheader, and different UEs use the common priority for transmitting the MSG3.

In a second example, a format of the payload of the RAR is shown in FIG. 5, the network may indicate a channel access priority specific to a UE through an R (reserved) bit in the payload, and different UEs use the specific priority for transmitting the MSG3.

In a third example, the network configures at least one channel access type (which may include at least one channel access priority) through RRC signaling, different channel access types (or different channel access priorities) correspond to different identification information indexes, and an index is indicated through an MSG2. The index corresponds to one channel access type in multiple channel access types configured through RRC and corresponds to one channel access priority.

In a fourth example, the network may also configure different channel access classes through RRC, and when the transmission time of the MSG3 is outside the MCOT of the MSG2, it is indicated through the MSG2 that the MSG3 is outside the MCOT. The UE determines the channel access class for sending the MSG3 according to the event for presently initiating RACH and an RRC configuration. In addition, when the MSG3 is in the MCOT, the channel access type (or class), for the MSG3, to be adopted may be directly determined.

In a fifth example, the network may also configure different Physical Random Access Channel (PRACH) resources, that is, time/frequency-domain resources (PRACH occasions) and code-domain resources (different preambles) correspond to different random access events, and different channel access priorities used for the MSG3 are determined based on different resources and preambles for an MSG1. In such case, the channel access priority is indicated to the UE through the MSG2 (the RAR).

It can be seen that, with the above solution, the terminal device may determine the channel access type used when the MSG3 is sent based on the configuration of the network side and/or the indication of the random access response. In this way, it is ensured that the terminal device may determine a channel access type to be used, and use different channel access priorities based on different service conditions, thereby improving the system access efficiency.

As shown in FIG. 6, the embodiments of the disclosure provide a method for indicating a channel access type, which is applied to a network device and includes the following operation. In 301, a channel access type for sending an MSG3 by a terminal device is determined through an indication of a random access response and/or through a configuration of a network side.

That is, the channel access type for the MSG3 is determined according to an indication of an MSG2 and/or according to the configuration of the network side.

The random access response contains a channel access type for the MSG3.

Specifically, the following manners may be included.

### First Manner

The channel access type for the MSG3 is contained in a subheader of the random access response, and the channel access type for the MSG3 is indicated through a reserved bit of the subheader of the random access response.

The channel access type may be indicated through the reserved bit of the subheader of the RAR.

Furthermore, the channel access type for the MSG3 is indicated through an independent subheader of random access response.

The independent subheader of the random access response may have different format from the subheader in the conventional art, and a specific format thereof is not limited in the embodiment, and is distinguished from the subheader defined in the conventional art.

### Second Manner

The channel access type for the MSG3 is contained in a payload of the random access response. The channel access type for the MSG3 is indicated through a reserved bit of the payload of the random access response.

Based on the above description, the channel access type for the MSG3 in the embodiment is a common channel type or different channel types for different terminal devices.

That is, the indication of the channel access type may be an indication of the common channel type, or may also be indications of different channel types for different terminal devices.

A processing manner for determining the channel access type for the MSG3 of the terminal device according to the indication of the RAR is described above, and a processing solution for determining the channel access type for the MSG3 of the terminal device through the configuration of the network side is described below.

At least one channel access type is configured for the terminal device through RRC signaling.

Identification information of the channel access type for the MSG3 of the terminal device is indicated through the random access response.

The channel access type for the MSG3 is one of the at least one channel access type configured through the RRC signaling.

It is to be pointed out that the network side may configure the at least one channel access type for the terminal device through the RRC signaling, and may further configure identification information index corresponding to each channel access type.

Correspondingly, when the channel access type for the MSG3 is indicated through the RAR, the identification information may be directly sent to indicate the channel access type, for the MSG3, to be used by the terminal device.

In the embodiment, the channel access type includes at least one of: a first channel access type, a second channel access type, at least one access class in the first channel access type and at least one third channel access type.

An access class in the third channel access type is different from an access class in the first channel access type and the second channel access type.

The third channel access type may include multiple access classes, and the access classes in the third channel access type are different from access classes of other types defined in the conventional art.

In addition, the method may further include an operation that it is indicated through the random access response that the MSG3 of the terminal device is outside maximum channel occupation time (MCOT) of the random access response. Correspondingly, the terminal device may also determine the channel access type for the MSG3 according to time when random access is presently initiated, and the at least one channel access type configured through RRC. Specifically, when transmission time of the MSG3 is outside the maximum channel occupation time of the random access response, the channel access type for the MSG3 is determined according to an event for presently initiating random access and the at least one channel access type configured through RRC.

There may also be a processing manner, in which, the channel access type for the MSG3 is determined according to the maximum channel occupation time of the random access response and the transmission time of the scheduled MSG3.

The operation that the channel access type for the MSG3 is determined according to the maximum channel occupation time of the random access response and the transmission time of the scheduled MSG3 includes the following operations.

When the transmission time of the MSG3 is in the maximum channel occupation time of the random access response, a high-priority channel access type is used.

When the transmission time of the MSG3 is outside the maximum channel occupation time of the random access response, a low-priority channel access type is used.

High priorities and low priorities may be set according to a practical condition. For example, if there are priorities 1 to 10 at present, priorities 6 to 10 may be set as high priorities, and one of the high priorities may be selected as a channel priority to be used by the terminal device. The remaining priorities may be set as low priorities, and one of the low priorities may be selected as the low-priority channel access type used by the terminal device.

The method further includes the following operation.

The channel access type to be used for the MSG3 of the terminal device is determined according to a time/frequency-domain resource and/or code-domain resource used for an MSG1 of the terminal device, and the channel access type for the MSG3 is indicated to the terminal device through the random access response.

Before such processing is executed, the network side may further configure different PRACH resources. That is, time/frequency-domain resources (PRACH occasions) and code-domain resources (different preambles) correspond to different random access events (types). The network side selects the channel access type for the MSG3 for the terminal device based on the time/frequency-domain resource and/or code-domain resource used for sending the MSG1 by the terminal device, and is notified to the terminal device through the MSG2.

The solution provided in the embodiment is exemplarily described below.

In a first example, a format of the RAR is shown in FIG. 4. A network may indicate a common channel access priority through two R (reserved) bits in the subheader, and different UEs use the common priority for transmitting the MSG3.

In a second example, a format of the payload of the RAR is shown in FIG. 5, the network may indicate a channel access priority specific to a UE through an R (reserved) bit in the payload, and different UEs use the specific priority for transmitting the MSG3.

In a third example, the network configures at least one channel access type (which may include at least one channel access priority) through RRC signaling, different channel access types (or different channel access priorities) correspond to different identification information indexes, and an index is indicated through an MSG2. The index corresponds to one channel access type in multiple channel access types configured through RRC and corresponds to one channel access priority.

In a fourth example, the network may also configure different channel access classes through RRC, and when the transmission time of the MSG3 is outside the MCOT of the MSG2, it is indicated through the MSG2 that the MSG3 is outside the MCOT. The UE determines the channel access class for sending the MSG3 according to the event for presently initiating RACH and an RRC configuration. In addition, when the MSG3 is in the MCOT, the channel access type (or class), for the MSG3, to be adopted may be directly determined.

In a fifth example, the network may also configure different PRACH resources, that is, time/frequency-domain resources (PRACH occasions) and code-domain resources (different preambles) correspond to different random access events, and different channel access priorities used for the MSG3 are determined based on different resources and preambles for an MSG1. In such case, the channel access priority is indicated to the UE through the MSG2 (the RAR).

In a sixth example, the network determines the channel access type for the MSG3 according to the maximum channel occupation time occupied by the MSG2 and whether the time of the scheduled MSG3 is in the MCOT or not. If the MSG3 is transmitted in the MCOT of the MSG2, a high-priority channel access manner is adopted; and if the MSG3 is transmitted outside the MCOT of the MSG2, a low-priority channel access manner is adopted.

It can be seen that, with the solution, the terminal device may determine the channel access type used when the MSG3 is sent based on the configuration of the network side and/or the indication of the random access response. In this way, it is ensured that the terminal device can determine a channel access type to be used, and different channel access priorities are used based on different service conditions, thereby improving access efficiency of the system.

As shown in FIG. 7, the embodiments of the disclosure provides a terminal device, which includes a first processing unit 71, configured to determine a channel access type for an MSG3 according to an indication of a random access response and/or according to a configuration of a network side.

That is, the channel access type for the MSG3 is determined according to an indication of an MSG2 and/or according to configuration of the network side.

The random access response includes the channel access type for the MSG3.

Specifically, the following manners may be adopted.

### First Manner

The channel access type for the MSG3 is contained in a subheader of the random access response, and the channel access type for the MSG3 is indicated through a reserved bit of the subheader of the random access response.

The channel access type may be indicated through the reserved bit of the subheader of the RAR.

Furthermore, the channel access type for the MSG3 is indicated through an independent subheader of random access response.

The independent subheader of the random access response may have different format from a subheader in a conventional art, and a specific format thereof is not limited in the embodiment, and is distinguished from the subheader defined in the conventional art.

### Second Manner

The channel access type for the MSG3 is contained in a payload of the random access response. The channel access type for the MSG3 is indicated through a reserved bit of the payload of the random access response.

Based on the above description, the channel access type for the MSG3 in the embodiment is a common channel type or different channel types for different terminal devices.

That is, the indication of the channel access type may be an indication of the common channel type, or may also be indications of different channel types for different terminal devices.

A processing manner for determining the channel access type for the MSG3 of the terminal device according to the indication of the RAR is described above, and a processing solution for determining the channel access type for the MSG3 of the terminal device through the configuration of the network side is described below.

The terminal device further includes a first communication unit 72.

The first communication unit 72 is configured to acquire at least one channel access type configured by the network side through RRC signaling of the network side.

The first communication unit 72 is configured to acquire identification information of the channel access type, indicated by the random access response, for the MSG3.

The channel access type for the MSG3 is one of the at least one channel access type configured through the RRC signaling.

It is to be pointed out that the network side may configure the at least one channel access type for the terminal device through the RRC signaling, and may further configure identification information index corresponding to each channel access type.

Correspondingly, when the channel access type for the MSG3 is indicated through the RAR, the identification information may be directly sent to indicate the channel access type, to be used by the terminal device, for the MSG3.

In the embodiment, the channel access type includes at least one of: a first channel access type, a second channel access type, at least one access class in the first channel access type and at least one third channel access type.

An access class in the third channel access type is different from the access classes in the first channel access type and the second channel access type

The third channel access type may include multiple access classes, and the access classes in the third channel access type are different from access classes of other types defined in the conventional art.

In addition, the first processing unit 71 may be used for the terminal device to determine the channel access type for the MSG3 according to time when random access is presently initiated, and the at least one channel access type configured through RRC. Specifically, when transmission time of the MSG3 is outside maximum channel occupation time (MCOT) of the random access response, the channel access type for the MSG3 is determined according to an event for presently initiating random access and the at least one channel access type configured through RRC.

Whether the transmission time of the MSG3 is outside the MCOT of the RAR may be configured by the network side.

The solution provided in the embodiment is exemplarily described below.

In a first example, a format of the RAR is shown in FIG. 4. A network may indicate a common channel access priority through two R (reserved) bits in the subheader, and different UEs use the common priority for transmitting the MSG3.

In a second example, a format of the payload of the RAR is shown in FIG. 5, the network may indicate a channel access priority specific to a UE through an R (reserved) bit in the payload, and different UEs use the specific priority for transmitting the MSG3.

In a third example, the network configures at least one channel access type (which may include at least one channel access priority) through RRC signaling, different channel access types (or different channel access priorities) correspond to different identification information indexes, and an index is indicated through an MSG2. The index corresponds to one channel access type in multiple channel access types configured through RRC and corresponds to one channel access priority.

In a fourth example, the network may also configure different channel access classes through RRC, and when the transmission time of the MSG3 is outside the MCOT of the MSG2, it is indicated through the MSG2 that the MSG3 is outside the MCOT. The UE determines the channel access class for sending the MSG3 according to the event for presently initiating RACH and an RRC configuration. In addition, when the MSG3 is in the MCOT, the channel access type (or class), to be used, for the MSG3 may be directly determined.

In a fifth example, the network may also configure different PRACH resources, that is, time/frequency-domain resources (PRACH occasions) and code-domain resources (different preambles) correspond to different random access events, and different channel access priorities used for the MSG3 are determined based on different resources and preambles for an MSG1. In such case, the channel access priority is indicated to the UE through the MSG2 (the RAR).

It can be seen that, with the above solution, the terminal device may determine the channel access type used when the MSG3 is sent based on the configuration of the network side and/or the indication of the random access response. In this way, it is ensured that the terminal device may determine a channel access type to be used, and different channel access priorities are used based on different service conditions, thereby improving the system access efficiency.

As shown in FIG. 8, the embodiments of the disclosure provide a network device, which includes a second communication unit 81, configured to determine a channel access type for sending an MSG3 by a terminal device according to an indication of a random access response and/or according to a configuration of a network side.

That is, the channel access type for the MSG3 is determined according to an indication of an MSG2 and/or according to the configuration of the network side.

The second communication unit 81 is configured to contain the channel access type for the MSG3 in the random access response.

Specifically, the following manners may be included.

### First Manner

The channel access type for the MSG3 is contained in a subheader of the random access response, and the channel access type for the MSG3 is indicated through a reserved bit of the subheader of the random access response.

The channel access type may be indicated through the reserved bit of the subheader of the RAR

Furthermore, the channel access type for the MSG3 is indicated through an independent subheader of random access response.

The independent subheader of the random access response may have different format from the subheader in the conventional art, and a specific format thereof is not limited in the embodiment, and is distinguished from the subheader defined in the conventional art.

### Second Manner

The channel access type for the MSG3 is contained in a payload of the random access response. The channel access type for the MSG3 is indicated through a reserved bit of the payload of the random access response.

Based on the above description, the channel access type for the MSG3 in the embodiment is a common channel type or different channel types for different terminal devices.

That is, the indication of the channel access type may be an indication of the common channel type, or may also be indications of different channel types for different terminal devices.

A processing manner for determining the channel access type for the MSG3 of the terminal device according to the indication of the RAR is described above, and a processing solution for determining the channel access type for the MSG3 of the terminal device through the configuration of the network side is described below.

The second communication unit 81 is configured to configure at least one channel access type for the terminal device through RRC signaling.

The second communication unit 81 is configured to indicate identification information of the channel access type for the MSG3 of the terminal device through the random access response.

The channel access type for the MSG3 is one of the at least one channel access type configured through the RRC signaling.

It is to be pointed out that the network side may configure the at least one channel access type for the terminal device through the RRC signaling, and may further configure identification information index corresponding to each channel access type.

Correspondingly, when the channel access type for the MSG3 is indicated through the RAR, the identification information may be directly sent to indicate the channel access type, to be used by the terminal device, for the MSG3.

In the embodiment, the channel access type includes at least one of: a first channel access type, a second channel access type, at least one access class in the first channel access type and at least one third channel access type.

An access class in the third channel access type is different from the access classes in the first channel access type and the second channel access type.

The third channel access type may include multiple access classes, and the access classes in the third channel access type are different from access classes of other types defined in the conventional art.

In addition, an operation is included that it is indicated through the random access response that the MSG3 of the terminal device is outside maximum channel occupation time (MCOT) of the random access response. Correspondingly, the terminal device may also determine the channel access type for the MSG3 according to time when random access is presently initiated, and the at least one channel access type configured through RRC. The network device further includes a second processing unit 82.

The second processing unit 82 is configured to determine the channel access type for the MSG3 according to the maximum channel occupation time of the random access response and the transmission time of the scheduled MSG3.

The second processing unit 82 is configured to determine the channel access type for the MSG3 according to the maximum channel occupation time of the random access response and the transmission time of the scheduled MSG3.

The second processing unit 82 is configured to, when the transmission time of the MSG3 is in the maximum channel occupation time of the random access response, use a high-priority channel access type; and when the transmission time of the MSG3 is outside the maximum channel occupation time of the random access response, use a low-priority channel access type.

High priorities and low priorities may be set according to a practical condition. For example, if there are priorities 1 to 10 at present, priorities 6 to 10 may be set as high priorities, and one of the high priorities may be selected as a channel priority to be used by the terminal device. The remaining priorities may be set as low priorities, and one of the low priorities may be selected as the low-priority channel access type used by the terminal device.

The method further includes the following operation.

The second processing unit 82 is configured to determine the channel access type to be used for the MSG3 of the terminal device according to a time/frequency-domain resource and/or code-domain resource used for an MSG1 of the terminal device, and indicate the channel access type for the MSG3 to the terminal device through the random access response through the second communication unit 81.

Before such processing is executed, the network side may further configure different PRACH resources. That is, time/frequency-domain resources (PRACH occasions) and code-domain resources (different preambles) correspond to different random access events (types). The network side selects the channel access type for the MSG3 for the terminal device based on the time/frequency-domain resource and/or code-domain resource used for sending the MSG1 by the terminal device, and is notified to the terminal device through the MSG2.

The solution provided in the embodiment is exemplarily described below.

In a first example, a format of the RAR is shown in FIG. 4. A network may indicate a common channel access priority through two R (reserved) bits in the subheader, and different UEs use the common priority for transmitting the MSG3.

In a second example, a format of the payload of the RAR is shown in FIG. 5, the network may indicate a channel access priority specific to a UE through an R (reserved) bit in the payload, and different UEs use the specific priority for transmitting the MSG3.

In a third example, the network configures at least one channel access type (which may include at least one channel access priority) through RRC signaling, different channel access types (or different channel access priorities) correspond to different identification information indexes, and an index is indicated through an MSG2. The index corresponds to one channel access type in multiple channel access types configured through RRC and corresponds to one channel access priority.

In a fourth example, the network may also configure different channel access classes through RRC, and when the transmission time of the MSG3 is outside the MCOT of the MSG2, it is indicated through the MSG2 that the MSG3 is outside the MCOT. The UE determines the channel access class for sending the MSG3 according to the event for presently initiating RACH and an RRC configuration. In addition, when the MSG3 is in the MCOT, the channel access type (or class) to be used for the MSG3 may be directly determined.

In a fifth example, the network may also configure different PRACH resources, that is, time/frequency-domain resources (PRACH occasions) and code-domain resources (different preambles) correspond to different random access events, and different channel access priorities used for the MSG3 are determined based on different resources and preambles for an MSG1. In such case, the channel access priority is indicated to the UE through the MSG2 (the RAR).

In a sixth example, the network determines the channel access type for the MSG3 according to the maximum channel occupation time occupied by the MSG2 and whether the time of the scheduled MSG3 is in the MCOT or not. If the MSG3 is transmitted in the MCOT of the MSG2, a high-priority channel access manner is adopted; and if the MSG3 is transmitted outside the MCOT of the MSG2, a low-priority channel access manner is adopted.

It can be seen that, with the solution, the terminal device may determine the channel access type used when the MSG3 is sent based on the configuration of the network side and/or the indication of the random access response. In this way, it is ensured that the terminal device can determine a channel access type to be used, and different channel access priorities are used based on different service conditions, thereby improving access efficiency of the system.

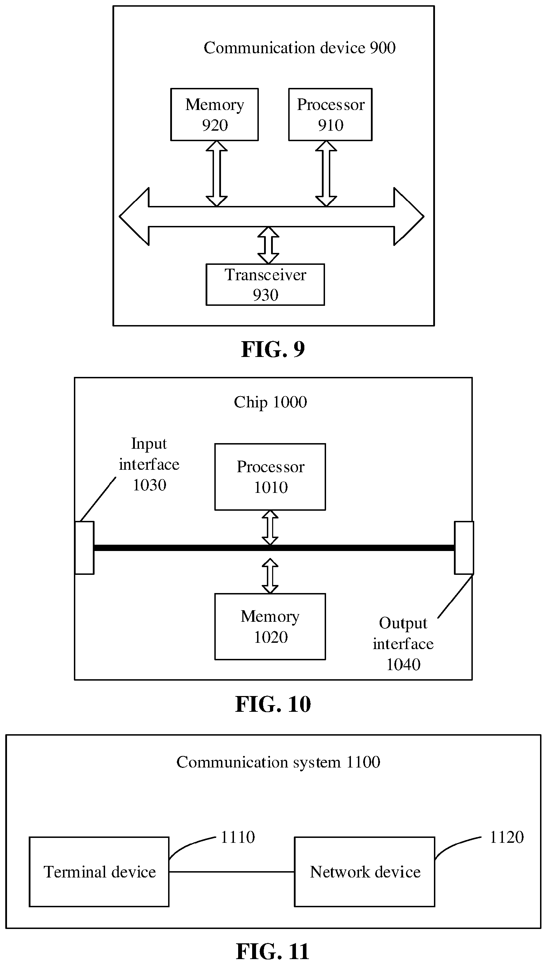

FIG. 9 is a schematic structure diagram of a communication device 900 according to an embodiment of the disclosure. The communication device 900 shown in FIG. 9 includes a processor 910, and the processor 910 may call and run a computer program from a memory to implement the methods in the embodiments of the disclosure.

Optionally, as shown in FIG. 9, the communication device 900 may further include the memory 920. The processor 910 may call and run the computer program from the memory 920 to implement the methods in the embodiments of the disclosure.

The memory 920 may be an independent device separate from the processor 910 and may also be integrated into the processor 910.

Optionally, as shown in FIG. 9, the communication device 900 may further include a transceiver 930, and the processor 910 may control the transceiver 930 to communicate with another device, specifically sending information or data to another device or receiving information or data sent by another device.

The transceiver 930 may include a transmitter and a receiver. The transceiver 930 may further include an antenna, and the number of the antennas may be one or more.

Optionally, the communication device 900 may be a network device of the embodiment of the disclosure, and the communication device 900 may implement corresponding flows implemented by the network device in each method of the embodiments of the disclosure. For simplicity, elaborations are omitted herein.

Optionally, the communication device 900 may be a terminal device or network device of the embodiment of the disclosure, and the communication device 900 may implement corresponding flows implemented by the mobile terminal/terminal device in each method of the embodiments of the disclosure. For simplicity, elaborations are omitted herein.

FIG. 10 is a schematic structural diagram of a chip according to an embodiment of the disclosure. The chip 1000 shown in FIG. 10 includes a processor 1010, and the processor 1010 may call and run a computer program from a memory to implement the methods in the embodiments of the disclosure.

Optionally, as shown in FIG. 10, the chip 1000 may further include the memory 1020. The processor 1010 may call and run the computer program from the memory 1020 to implement the methods in the embodiments of the disclosure.

The memory 1020 may be an independent device separate from the processor 1010 and may also be integrated into the processor 1010.

Optionally, the chip 1000 may further include an input interface 1030. The processor 1010 may control the input interface 1030 to communicate with another device or chip, specifically acquiring information or data sent by the other device or chip.

Optionally, the chip 1000 may further include an output interface 1040. The processor 1010 may control the output interface 1040 to communicate with another device or chip, specifically outputting information or data sent by the another device or chip.

Optionally, the chip may be applied to the network device of the embodiments of the disclosure, and the chip may implement corresponding flows implemented by the network device in each method of the embodiments of the disclosure. For simplicity, elaborations are omitted herein.

Optionally, the chip may be applied to the terminal device of the embodiments of the disclosure, and the chip may implement corresponding flows implemented by the terminal device in each method of the embodiments of the disclosure. For simplicity, elaborations are omitted herein.

It is to be understood that the chip mentioned in the embodiment of the disclosure may also be called a system-level chip, a system chip, a chip system or a system on chip, etc.

FIG. 11 is a second block diagram of a communication system 1100 according to an embodiment of the disclosure. As shown in FIG. 11, a communication system 1100 includes a terminal device 1110 and a network device 1120.

The terminal device 1110 may be configured to realize corresponding functions realized by the terminal device in the above method, and the network device 1120 may be configured to realize corresponding functions realized by the network device in the above method. For simplicity, elaborations are omitted herein.

It is to be understood that the processor in the embodiment of the disclosure may be an integrated circuit chip and has a signal processing capability. In an implementation process, each step of the above method embodiments may be implemented by an integrated logical circuit of hardware in the processor or an instruction in a software form. The above processor may be a universal processor, a Digital Signal Processor (DSP), an Application Specific Integrated Circuit (ASIC), a Field Programmable Gate Array (FPGA) or another programmable logical device, a discrete gate or a transistor logical device and a discrete hardware component. Each method, operation and logical block diagram disclosed in the embodiments of the disclosure may be implemented or executed. The universal processor may be a microprocessor or the processor may also be any conventional processor and the like. The operations of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and implements the steps of the method in combination with hardware.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the above memory is exemplarily but unlimitedly described. For example, the memory in the embodiments of the disclosure may also be an SRAM, a DRAM, an SDRAM, a DDR SDRAM, an ESDRAM, an SLDRAM and a DR RAM. That is, the memory in the embodiments of the disclosure is intended to include, but not limited to, memories of these and any other proper types.

The embodiments of the disclosure also provide a computer-readable storage medium, which is configured to store a computer program.

Optionally, the computer-readable storage medium may be applied to a network device in the embodiments of the disclosure, and the computer program enables a computer to execute corresponding flows implemented by the network device in each method of the embodiments of the disclosure. For simplicity, elaborations are omitted herein.

Optionally, the computer-readable storage medium may be applied to a mobile terminal/terminal device in the embodiments of the disclosure, and the computer program enables a computer to execute corresponding flows implemented by a mobile terminal/ the terminal device in each method of the embodiments of the disclosure. For simplicity, elaborations are omitted herein.

The embodiments of the disclosure further provide a computer program product, which includes a computer program instruction.

Optionally, the computer program product may be applied to a network device in the embodiments of the disclosure, and the computer program instruction enables a computer to execute corresponding flows implemented by the network device in each method of the embodiments of the disclosure. For simplicity, elaborations are omitted herein.

Optionally, the computer program product may be applied to a mobile terminal/terminal device in the embodiments of the disclosure, and the computer program instruction enables the computer to execute corresponding flows implemented by the mobile terminal/terminal device in each method of the embodiments of the disclosure. For simplicity, elaborations are omitted herein.

The embodiments of the disclosure further provide a computer program.

Optionally, the computer program may be applied to a network device in the embodiments of the disclosure, and the computer program runs in a computer to enable the computer to execute corresponding flows implemented by the network device in each method of the embodiments of the disclosure. For simplicity, elaborations are omitted herein.

Optionally, the computer program may be applied to a mobile terminal/terminal device in the embodiments of the disclosure, and the computer program runs in the computer to enable the computer to execute corresponding flows implemented by the mobile terminal/terminal device in each method of the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that regarding specific operation processes of the system, device and unit described above, reference may be made to the corresponding processes in the above method embodiment, and elaborations are omitted herein for convenient and brief description.

In some embodiments provided by the disclosure, it is to be understood that the disclosed system, device and method may be implemented in another manner. For example, the device embodiment described above is only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection implemented through some interfaces, the device or the units, and may be electrical and mechanical or in other forms.

The units described as separate parts may or may not be physically separated, and parts displayed as units may or may not be physical units, and namely may be located in the same place, or may also be distributed to multiple network units. A part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being implemented in form of software functional unit and sold or used as an independent product, the function may also be stored in a computer-readable storage medium. Based on such an understanding, an essential part of the technical solutions in the disclosure, a part of the technical solutions making contributions to the prior art, or a part of the technical solutions may be embodied in a form of a software product. The computer software product is stored in a storage medium and includes several instructions configured to enable a computer device (which may be a personal computer, a server, a network device or the like) to execute all or a part of the operations of the method in each embodiment of the disclosure. The above-mentioned storage medium includes: various media capable of storing program codes such as a U disk, a mobile hard disk, a Read-Only Memory (ROM), a Random Access Memory (RAM), a magnetic disk and an optical disk.

## Claims

1. A method for indicating a channel access type, implemented by a terminal device, the method comprising:
determining (201) a channel access type for a Message 3, MSG3, according to at least one of an indication of a random access response or a configuration sent by a network side through Radio Resource Control, RRC, signaling,
wherein the channel access type for the MSG3 is contained in a subheader of the random access response; or, the channel access type for the MSG3 is contained in a payload of the random access response and indicated through a reserved bit of the payload of the random access response.

2. The method of claim 1, wherein the channel access type for the MSG3 is indicated through a reserved bit of the subheader of the random access response.

3. The method of claim 1, wherein the channel access type for the MSG3 is a common channel type or different channel types for different terminal devices.

4. The method of claim 1, further comprising:
acquiring at least one channel access type of the network side through the RRC signaling of the network side.

5. The method of any one of claims 1 to 4, wherein the channel access type comprises at least one of:
a first channel access type, a second channel access type, at least one access class comprised in the first access channel type and at least one third channel access type,
wherein an access class comprised in the third channel access type is different from an access class comprised in the first channel access type and the second channel access type.

6. A terminal device comprising:
a first processing unit (71), configured to determine a channel access type for a Message 3, MSG3, according to at least one of an indication of a random access response or a configuration sent by a network side through Radio Resource Control, RRC, signaling,
wherein the channel access type for the MSG3 is contained in a subheader of the random access response; or, the channel access type for the MSG3 is contained in a payload of the random access response and indicated through a reserved bit of the payload of the random access response.

7. The terminal device of claim 6, wherein the channel access type for the MSG3 is indicated through an independent subheader of the random access response; or, the channel access type for the MSG3 is indicated through a reserved bit of a subheader of the random access response.

8. The terminal device of any one of claims 6 to 7, wherein the channel access type comprises at least one of:
a first channel access type, a second channel access type, at least one access class comprised in the first access channel type and at least one third channel access type,
wherein an access class comprised in the third channel access type is different from an access class comprised in the first channel access type and the second channel access type.

## Patentansprüche

1. Verfahren zum Anzeigen eines Kanalzugriffstyps, das durch eine Endgerätvorrichtung implementiert wird, wobei das Verfahren umfasst:
Bestimmen (201) eines Kanalzugriffstyps für eine Nachricht 3, MSG3, gemäß wenigstens entweder einer Anzeige einer Direktzugriffsantwort oder einer Konfiguration, die von einer Netzseite über RRC (Radio Resource Control, Funknetzsteuerung) -Signalisierung gesendet wird,
wobei der Kanalzugriffstyp für die MSG3 in einem Subheader der Direktzugriffsantwort enthalten ist; oder
der Kanalzugriffstyp für die MSG3 in einer Nutzlast der Direktzugriffsantwort enthalten ist und durch ein reserviertes Bit der Nutzlast der Direktzugriffsantwort angezeigt wird.

2. Verfahren nach Anspruch 1, wobei der Kanalzugriffstyp für die MSG3 durch ein reserviertes Bit des Subheaders der Direktzugriffsantwort angegeben wird.

3. Verfahren nach Anspruch 1, wobei der Kanalzugriffstyp für die MSG3 ein gemeinsamer Kanaltyp oder verschiedene Kanaltypen für verschiedene Endgerätvorrichtungen ist.

4. Verfahren nach Anspruch 1, ferner umfassend:
Erfassen wenigstens eines Kanalzugriffstyps der Netzseite über die RRC-Signalisierung der Netzseite.

5. Verfahren nach einem der Ansprüche 1 bis 4, wobei der Kanalzugriffstyp wenigstens eines der folgenden umfasst:
einen ersten Kanalzugriffstyp, einen zweiten Kanalzugriffstyp, wenigstens eine im ersten Kanalzugriffstyp enthaltene Zugriffsklasse und wenigstens einen dritten Kanalzugriffstyp,
wobei eine im dritten Kanalzugriffstyp enthaltene Zugriffsklasse von einer im ersten Kanalzugriffstyp und im zweiten Kanalzugriffstyp enthaltenen Zugriffsklasse verschieden ist.

6. Endgerätvorrichtung, umfassend:
eine erste Verarbeitungseinheit (71), die ausgelegt ist zum Bestimmen eines Kanalzugriffstyps für eine Nachricht 3, MSG3, gemäß wenigstens einer Anzeige einer Direktzugriffsantwort oder einer Konfiguration, die von einer Netzseite über RRC (Radio Resource Control, Funknetzsteuerung) -Signalisierung gesendet wird,
wobei der Kanalzugriffstyp für die MSG3 in einem Subheader der Direktzugriffsantwort enthalten ist; oder
der Kanalzugriffstyp für die MSG3 in einer Nutzlast der Direktzugriffsantwort enthalten ist und durch ein reserviertes Bit der Nutzlast der Direktzugriffsantwort angezeigt wird.

7. Endgerätvorrichtung nach Anspruch 6, wobei der Kanalzugriffstyp für die MSG3 durch einen unabhängigen Subheader der Direktzugriffsantwort angezeigt wird; oder der Kanalzugriffstyp für die MSG3 durch ein reserviertes Bit eines Subheaders der Direktzugriffsantwort angezeigt wird.

8. Endgerätvorrichtung nach einem der Ansprüche 6 bis 7, wobei der Kanalzugriffstyp wenigstens eines der folgenden umfasst:
einen ersten Kanalzugriffstyp, einen zweiten Kanalzugriffstyp, wenigstens eine im ersten Kanalzugriffstyp enthaltene Zugriffsklasse und wenigstens einen dritten Kanalzugriffstyp,
wobei eine im dritten Kanalzugriffstyp enthaltene Zugriffsklasse von einer im ersten Kanalzugriffstyp und im zweiten Kanalzugriffstyp enthaltenen Zugriffsklasse verschieden ist.

## Revendications

1. Procédé d'indication d'un type d'accès à un canal, mis en œuvre par un dispositif terminal, le procédé comportant les étapes consistant à :
déterminer (201) un type d'accès à un canal pour un Message 3, MSG3, selon une indication d'une réponse d'accès aléatoire et/ou une configuration émise par un côté réseau par l'intermédiaire d'une signalisation de gestion des ressources radioélectriques, RRC,
le type d'accès au canal pour le MSG3 étant contenu dans un sous-en-tête de la réponse d'accès aléatoire ;
ou le type d'accès au canal pour le MSG3 étant contenu dans une charge utile de la réponse d'accès aléatoire et indiqué par l'intermédiaire d'un bit réservé de la charge utile de la réponse d'accès aléatoire.

2. Procédé selon la revendication 1, le type d'accès au canal pour le MSG3 étant indiqué par l'intermédiaire d'un bit réservé du sous-en-tête de la réponse d'accès aléatoire.

3. Procédé selon la revendication 1, le type d'accès au canal pour le MSG3 étant un type de canal commun ou des types de canal différents pour des dispositifs terminaux différents.

4. Procédé selon la revendication 1, comportant en outre :
l'acquisition d'au moins un type d'accès à un canal du côté réseau par l'intermédiaire de la signalisation de RRC du côté réseau.

5. Procédé selon l'une quelconque des revendications 1 à 4, le type d'accès au canal comportant au moins un type parmi :
un premier type d'accès au canal, un deuxième type d'accès au canal, au moins une classe d'accès comprise dans le premier type d'accès au canal et au moins un troisième type d'accès au canal,
une classe d'accès comprise dans le troisième type d'accès au canal étant différente d'une classe d'accès comprise dans le premier type d'accès au canal et le deuxième type d'accès au canal.

6. Dispositif terminal comportant :
une première unité (71) de traitement, configurée pour déterminer un type d'accès à un canal pour un Message 3, MSG3, selon au moins une indication d'une réponse d'accès aléatoire et/ou une configuration émise par un côté réseau par l'intermédiaire d'une signalisation de gestion des ressources radioélectriques, RRC,
le type d'accès au canal pour le MSG3 étant contenu dans un sous-en-tête de la réponse d'accès aléatoire ;
ou le type d'accès au canal pour le MSG3 étant contenu dans une charge utile de la réponse d'accès aléatoire et indiqué par l'intermédiaire d'un bit réservé de la charge utile de la réponse d'accès aléatoire.

7. Dispositif terminal selon la revendication 6, le type d'accès au canal pour le MSG3 étant indiqué par l'intermédiaire d'un sous-en-tête indépendant de la réponse d'accès aléatoire ; ou le type d'accès au canal pour le MSG3 étant indiqué par l'intermédiaire d'un bit réservé d'un sous-en-tête de la réponse d'accès aléatoire.

8. Dispositif terminal selon l'une quelconque des revendications 6 à 7, le type d'accès au canal comportant au moins un type parmi :
un premier type d'accès au canal, un deuxième type d'accès au canal, au moins une classe d'accès comprise dans le premier type d'accès au canal et au moins un troisième type d'accès au canal,
une classe d'accès comprise dans le troisième type d'accès au canal étant différente d'une classe d'accès comprise dans le premier type d'accès au canal et le deuxième type d'accès au canal.
